Europäisches Patentamt

European Patent Office

Office européen des brevets

(11) Publication number: **0 236 112**
**A2**

## (12) EUROPEAN PATENT APPLICATION

(21) Application number: **87301807.1**

(22) Date of filing: **02.03.87**

(51) Int. Cl.⁴: **G 02 F 1/13**
G 02 B 5/08, G 02 F 1/133,
G 02 F 1/137

(30) Priority: **06.03.86 US 836850**

(43) Date of publication of application:
**09.09.87 Bulletin 87/37**

(84) Designated Contracting States: **DE FR GB**

(71) Applicant: **TALIQ CORPORATION**
**265 North Whisman Road**
**Mountain View California 94043 (US)**

(72) Inventor: **Fergason, James L.**
**23 Hawthorn Drive**
**Atherton California 94025 (US)**

**McLaughlin, Charles William**
**220 Erica Way**
**Portola Valley California 94025 (US)**

(74) Representative: **Cross, Rupert Edward Blount et al**
**BOULT, WADE & TENNANT 27 Furnival Street**
**London EC4A 1PQ (GB)**

(54) **Mirror.**

(57) Liquid crystal material is operable to alter the reflection characteristics of a mirror, for example to provide day/night rearview mirror functions. In one embodiment the liquid crystal material (12) may be selectively energized or deenergized to provide two different levels of reflection, i.e., substantially full or reduced levels of reflection of incident light. In another embodiment analog adjustment of the level of reflection is possible preferably together with selectivity of full or reduced level reflection. Briefly, the mirror includes a mirror support (22), a reflector (10, 11) to reflect light incident thereon, and liquid crystal material (12) for determining the amount of light reflected by the reflector (10, 11). The mirror may include plural reflectors (10, 11) with liquid crystal material (12) between the reflectors and selectively operable primarily to transmit or primarily to scatter light to determine from which of the reflectors incident light primarily is reflected. Alternatively, the reflector may be a single reflector (10') and the liquid crystal material (12') then would include volumes of liquid crystal with pleochroic dye in a containment medium, all mounted with respect to the support (22) for selectively attenuating light.

FIG.-2

EP 0 236 112 A2

**Description**

MIRROR

This invention relates to a mirror, and, more particularly, to a day/night mirror as used in automobiles.

Day/night rearview mirrors have been used in the interior of automobiles and other vehicles to provide substantially full reflection of incident light, say for use in daylight ambient conditions, and to provide a reduced reflection (or partial light absorption) and/or glare reduction function while still reflecting some incident light, for example during night time conditions. The reduced glare mode may be achieved by providing the mirror with the capability to absorb some of the incident light. More commonly, glare is reduced by reducing the proportion of incident light that is reflected as reflected light from the mirror to the vehicle operator. Such operation is particularly advantageous to reduce the glare from the headlights of vehicles approaching from the rear. One approach to achieve such mirror adjustment is to mechanically tilt part or all of the mirror apparatus so that one or the other of plural respective reflective surfaces is placed in proper alignment to direct reflected light from a certain angle to the eyes of the vehicle operator.

One of the problems, however, with day/night rearview mirrors utilized heretofore has been the displacement of the images between day and night viewing, i.e., the existence of parallax.

According to this invention there is provided a mirror comprising a support, and reflector means to reflect light incident thereon, characterized by liquid crystal means selectively operable primarily to transmit or primarily to scatter light, arranged to determine the amount of light reflected by said reflector means.

With the mirror of the present invention the liquid crystal material is operable to alter the reflection characteristics of the mirror, for example to provide the day/night mirror functions noted above. The liquid crystal material may be selectively energized or deenergized to provide two different levels of reflection, i.e., substantially full or reduced levels of reflection of incident light. Otherwise analog adjustment of the level of reflection is possible preferably together with selectivity of full or reduced level reflection.

The liquid crystal material preferably is of the type composed of (a) liquid crystal, preferably nematic or operationally nematic liquid crystal having positive dielectric anisotropy with certain index of refraction characteristics, in volumes formed by and/or bounded by (b) a containment medium. In one embodiment the liquid crystal has optical anisotrophy having birefringence, i.e., the ordinary and extraordinary indices of refraction thereof are noticeably actually and functionally different; one index of refraction preferably is matched to that of the containment medium to minimize refraction of light at the interface thereof and the other is different from that of the containment medium to cause refraction and, thus, scattering of light incident thereon. In a second embodiment the liquid crystal has relatively low birefringence and the index of refraction of the liquid crystal is relatively closely matched to that of the containment medium to minimize refraction and scattering at the interface thereof; however, pleochroic dye in the liquid crystal material provides controlled attenuation of light by absorption of light as a function of a prescribed input to the liquid crystal material. Examples of such liquid crystal materials are described in US-A-4435047 and US Patent Applications Serial Nos. 477138, 477242, 477078, 585883 and 705209.

A preferred input to the liquid crystal material is an electric field. In the absence of such input the liquid crystal structure is distorted by surfaces of the containment medium, such as the surfaces bounding the volumes of liquid crystal in the containment medium. However, in response to an electric field the liquid crystal structure will align or at least tend to align with respect to such field, the liquid crystal structure tending to assume a generally parallel alignment, the extent of such alignment being a function of the magnitude of the field. The liquid crystal is reversible in that upon removal of the field the liquid crystal structure reverts to the distorted alignment under influence of the mentioned surface.

The mirror of the invention can include a support, plural reflectors, one positioned relatively proximate the support and a second positioned more distantly from the support, and liquid crystal material between the reflectors and selectively operable primarily to transmit or primarily to scatter light to determine from which of the reflectors incident light primarily is reflected to form a dominant discernible image. In a preferred embodiment one of the reflectors is a partial reflector and partial transmitter of light. When in the scattering mode, then, the liquid crystal material scatters light transmitted through such partial reflector and reflected by the second reflector so that to the eye of an observer the incident light and image reflected by the partial reflector is dominant and recognizable. When the liquid crystal material is in the transmitting mode, the light reflected by the other reflector dominates that reflected by the partial reflector and, thus, forms to the eye of an observer, such as a vehicle operator, the dominant recognizable image.

Otherwise the mirror of the invention can include a reflector for reflecting light incident thereon, liquid crystal material mounted with respect to the reflector for attenuating at least one of incident and reflected light, the liquid crystal material including low birefringence operationally nematic liquid crystal containing pleochroic dye, and a containment medium for containing plural volumes of such liquid crystal and dye, the containment medium having surfaces for distorting the natural structure of the liquid crystal to cause the dye to increase light absorption, and the liquid crystal material being responsive to a prescribed input to reduce the amount of such light absorption.

This invention will now be described by way of example with reference to the drawings, in which:-

Fig. 1 is a schematic view of a day/night rearview mirror in accordance with the present invention;

Fig. 2 is a schematic view of a day/night mirror with plural reflectors looking generally in the direction of the arrows 2--2 of Fig. 1;

Figs. 3 and 4 are schematic sectional views similar to Fig. 2 showing operation of the day/night mirror in transmissive, full reflection, and in scattering, reduced glare, modes, respectively;

Fig. 5 is a schematic sectional view of a modified day/night mirror in accordance with the invention using low birefringence liquid crystal material and pleochroic dye to attenuate light;

Figs. 6 and 7 are schematic illustrations of a liquid crystal material used in mirrors according to the invention including a volume of liquid crystal in a containment medium with the liquid crystal structure in distorted and parallel alignment, respectively; and

Fig. 8 is a schematic illustration of a liquid crystal material used in mirrors according to the invention including a volume of liquid crystal with pleochroic dye in a containment medium with the liquid crystal structure in distorted alignment.

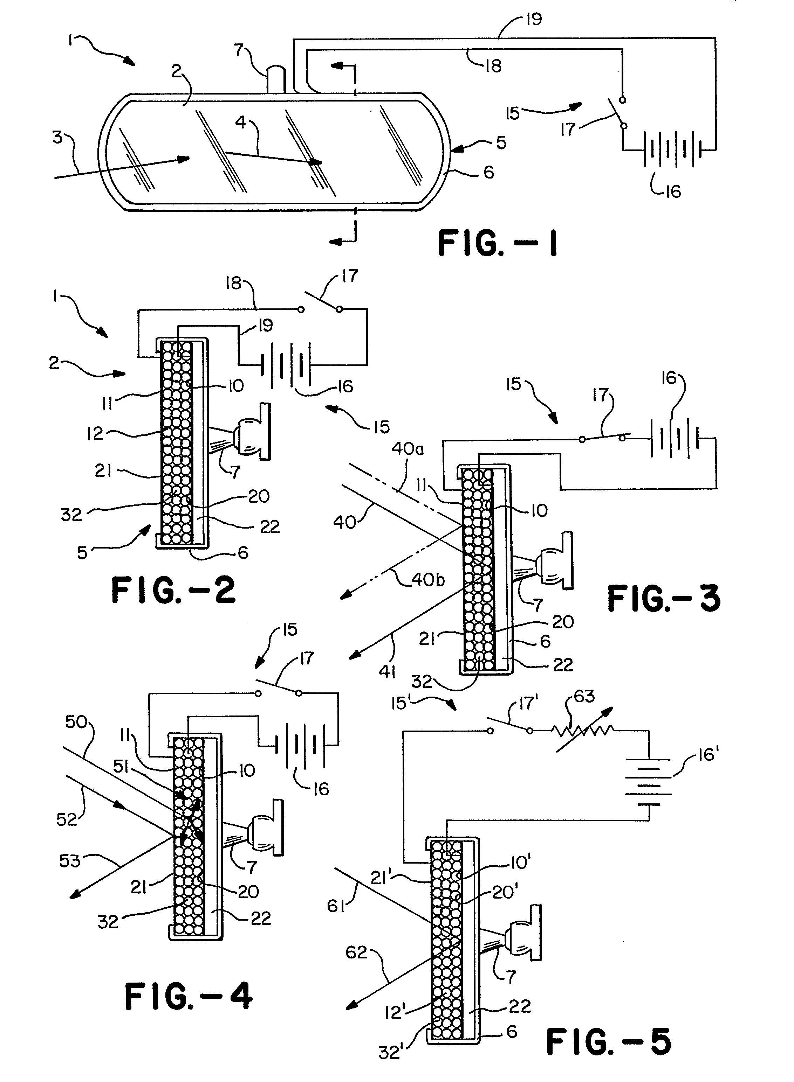

Referring now in detail to the drawings, wherein like reference numerals designate like parts in the several figures, and initially to Fig. 1, a day/night rearview mirror in accordance with the present invention is generally designated at 1. The mirror 1 includes a face 2 onto which incident light 3 may impinge and generally from which reflected light 4 is directed by an optical reflector generally designated 5, say to the eyes of an observer, such as a vehicle operator or driver, not shown. The mirror 1 may include a frame 6 and a mounting bracket 7 for mounting the mirror with respect to the front windshield, etc. of a vehicle interior or from some other member of a vehicle or other main support structure. The frame 6 may comprise a plastic housing that provides environmental protection for the interior elements of the mirror.

In the embodiment of mirror 1 illustrated in detail in Figs. 2-4, the optical reflector of the mirror 1 includes two reflectors 10, 11 and liquid crystal material 12 therebetween. On the other hand, a modified mirror 1' shown in Fig. 5, which mirror is similar to the mirror 1, may require as the optical reflector only the single reflector 10' illustrated. In Fig. 5, primed reference numerals designate parts that are similar to parts identified by the same unprimed reference numerals in Figs. 1-4. Ideally, the reflectors would have optical characteristics for reflecting light to the eye of an observer to establish an image having quality and clarity similar to that achieved with a conventional rearview mirror.

The optical characteristics of the liquid crystal material 12, 12' are a function of whether or not a prescribed input is applied to the liquid crystal material; and in the case of the liquid crystal material 12', in particular, optical absorption characteristics are a function of the magnitude of the prescribed input. An example of a prescribed input would be an electric field.

A schematic representation of a circuit 15 for selectively applying or not an electric field to the liquid crystal material 12 in the mirror 1 is illustrated in Figs. 1-4. Such circuit 15 includes an electric power supply 16, such as a battery, indeed possibly the battery or other electrical supply of a vehicle, and a switch 17. The electric power supply may alternatively be a source of alternating current. The circuit 15 is connected by electrical leads 18, 19 to electrodes 20, 21 positioned on opposite sides or surfaces of the liquid crystal material 12. Operationally, with the switch 17 open, no electric field is applied to the liquid crystal material, which then is in a so-called field-off or deenergized condition or mode. With the switch 17 closed, an electric field is applied across the liquid crystal material, which then goes into a so-called field-on condition or mode. The reflection characteristics of the mirror 1 will depend on the field-on or field-off condition of the liquid crystal material 12, as is described in further detail below.

The switch 17 may be a manually operated switch. However, an advantage of the liquid crystal mirror 1 of the invention is that the circuit 15 could include automatically responsive components. For example, the switch 17 could be one that is responsive automatically to a prescribed input thereto without requiring manual operation; such an exemplary switch 17 may be a photosensitive device or combination of parts or devices that can respond to intensity, existence, etc. of light incident on the mirror 1, ambient light conditions, etc. Field-off operation of the liquid crystal results in glare reduction operation of the mirror 1, as is described further below. The circuit 15 is intended not to apply electric field to the liquid crystal material 12 during night time operation of a vehicle. Therefore, the suggested automatic switch 17 or components comprising the same should be capable of effecting field-off operation at night time, when low ambient light conditions occur and vehicles may be using headlights.

The mirror 1 includes a support 22 of glass, plastic, or even of metal or other material, as may be desired. The support 22 is mounted on the frame 6 and provides support for the several parts of the mirror 1, as can be seen in Fig. 2. The electrode 20 may be of various materials, such as chrome, indium oxide, silver, and so on, capable of receiving an electrical input from the conductor 19 and of cooperating with the electrode 21 to apply an electric field to the liquid crystal material 12. Similarly, the electrode 21 may be of chrome, indium oxide, gold, silver, etc. for such electrical purpose. Such electrodes preferably are at opposite sides or surfaces of the liquid crystal material 12 and extend over, across and parallel to such respective sides or surfaces.

In the embodiment of the invention, as it is illustrated in Fig. 2, the electrode 20 and the reflector 10 are actually the same part and indeed may take the form of an aluminum, chrome or silver optically reflective and electrically conductive coating on the support 22. In such case preferably the support 22 is of glass, plastic or other electrically non-conductive material. The support 22 is preferably optically flat and free of distortion. The combined electrode and reflector should not chemically react with the liquid crystal material.

However, if desired, the electrode 20 and the reflector 10 may be different materials and constitute different layers of the mirror 1; in such case either the reflector 10 would be electrically non-conductive and/or if necessary there could be provided a means to provide electrical isolation between the electrode 20 and the reflector 10. In this configuration, the electrode 20 may be optically transparent or at least substantially so to avoid attenuating light as it is transmitted therethrough as incident and reflected beams with respect to the reflector 10. Furthermore, the electrode 20 may be partially reflective and partially transmissive and may be substantially in the same plane, i.e., be very thin, as the reflector 10 so as to enhance the reflection characteristics of the reflector without substantially distorting the image characteristics of the reflected light. Moreover, the support 22 may be interposed between the electrode 20 and the liquid crystal material 12 if it still were possible to provide adequate electric field to the liquid crystal material when desired.

Support 22 may comprise a flexible, non-conductive surface on which electrode 20 and reflector 10, being the same part, are formed. The flexible substrate and reflective, conductive coating should be selected to provide maximum product life. Support 22 may be a polyester film, such as Mylar®, that has been precoated with the material, e.g., aluminum or chrome, that forms the electrode 20 and reflector 10. The film may be 2-20μm thick, and the conductive, reflective coating should have a reflectivity greater than 50%, preferably in the range of 70-80%. The combination of the flexible substrate and conductive coating should be such that the substrate protects the reflective coating from corrosion during the expected life of the mirror. Support 22 may be opaque, and thus may be formed of such high temperature plastics as Kapton.

The liquid crystal material may be coated onto the flexible substrate having the conductive coating. A protective, removable cover slip may be applied, and the resultant sandwich sold as a roll stock to mirror manufacturers who would remove the cover slip prior to use in constructing a mirror.

The electrode 21 and the reflector 11 preferably also are formed as a single element that has both optical reflection characteristics and electrical conducting characteristics, such as chrome, silver, indium oxide, etc. The reflector 11, though, is intended to provide only partial light reflection and partial light transmittance functions.

However, if desired, the reflector 11 and electrode 21 may be separate items, the reflector being a partially reflecting and partially transmitting material and the electrode being primarily an electrically conductive material which does not interfere with the optical operation of the reflector. For example, the electrode 21 may comprise a transparent, conductive coating, such as indium tin oxide, on a rigid glass substrate that forms reflector 11. This glass substrate should provide mechanical integrity and a scratch resistant surface. The transmissive characteristics of the electrode coating should be maximized, and the electrode coating should have a resistivity of about 500 ohms per square layer.

Alternatively, one or both of the reflector 11 and electrode 21 may assist or enhance operation or function of the other, e.g., with respect to electrical conductivity and/or optical reflection characteristics. In any event it is desirable that if the reflectors 10, 11 are separate from the electrodes 20, 21, such reflectors would not impede electrical operation of the electrodes, and that the electrodes not impede optical operation of the reflectors.

The overall thickness of electrode 21 and reflector 11, whether formed as a single or separate elements, is preferably less than 1μm and most preferably less than .1μm. Such thin surface dimensions reduce parallax between reflectors 10 and 11.

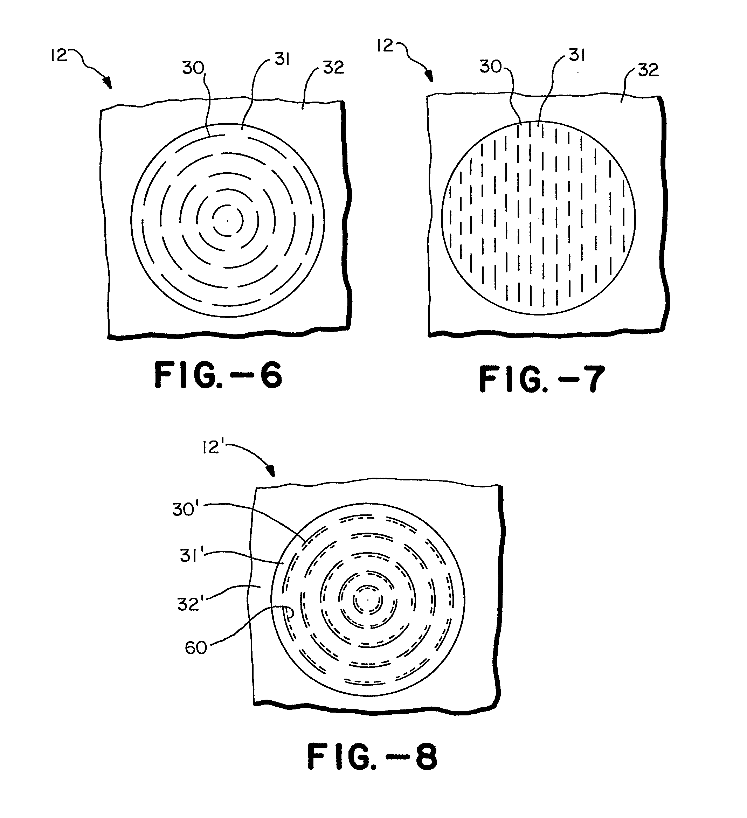

The liquid crystal material 12 preferably is of the type disclosed in US-A-4435047. In particular, as is represented schematically in Fig. 6, such liquid crystal material 12 preferably is formed of operationally nematic liquid crystal 30 in a plurality of volumes 31 formed in or defined by a containment medium 32. The liquid crystal 30 preferably is optically transparent, and the containment medium preferably also is optically transparent. In the embodiment illustrated in Figs. 1-4, preferably the liquid crystal material 12 does not include any pleochroic dye. However, the containment medium 32 does have an index of refraction and the liquid crystal material is birefringent, being optically anisotropic and having positive dielectric anisotropy during operation.

The layer of liquid crystal material 12, 12' is preferably less than 20μm in thickness, and more preferably it is less than 10μm in thickness. Most preferably, the layer of liquid crystal material is about 5μm thick.

The transmission and residual scattering of the liquid crystal material in the field-on state should be minimized. In the field-off state, scattering should be such that the overall reflectivity of the mirror is about 10-20% and preferably approximately 15%. This may be obtained from first surface reflection at the interface between electrode 21 and the reflector 11.

Preferably the ordinary index of refraction of the liquid crystal 30 in the presence of an electric field, e.g., in field-on condition, the field being of adequate strength, matches the index of refraction of the containment medium. Fig. 7 illustrates the alignment of the liquid crystal 30 with respect to an applied electric field E. However, in the absence of an electric field the containment medium, more specifically, the surface(s) thereof, i.e., the surfaces of the containment medium walls bounding each of the volumes 31 of liquid crystal 30, tend to distort the natural liquid crystal structure to present to a great extent at the interfaces of the liquid crystal and surfaces the extraordinary index of refraction characteristics of the liquid crystal; and such extraordinary index of refraction is different from the index of refraction of the containment medium. Therefore, when in such distorted alignment condition, sometimes referred to nematic curvilinearly aligned phase (NCAP) of the liquid crystal, there is a difference in the indices of refraction at the interface between the liquid crystal and containment medium, which causes refraction and, thus, scattering of light incident thereon. Fig. 6 illustrates such distorted alignment of the liquid crystal structure in the absence of an electric field.

The volumes 31 of liquid crystal material may be separate from one another, may be interconnected to one or more volumes, or may include both separate and interconnected volumes. The liquid crystal material 12 may be prepared in the form of an emulsion of liquid crystal and containment medium which is subsequently dried or cured. Alternatively, the liquid crystal material 12 may take the form of a plurality of individually formed capsules of liquid crystal in a containment medium. The liquid crystal material may be considered encapsulated liquid crystal material. In any event, regardless of what the liquid crystal material is called or how it is made, it should provide an operative function such that the surface of containment medium confronting liquid crystal will distort the natural structure of the liquid crystal absent a prescribed input.

One such liquid crystal is nematic liquid crystal, and two examples of containment media are polyvinyl alcohol or latex.

Also, although the distorted alignment of liquid crystal structure illustrated in Fig. 6 is of the type wherein the liquid crystal structure generally is parallel to the wall of the containment medium bounding the given volume of liquid crystal, such distortion may result in the liquid crystal structure being generally normal to the volume wall, at least in proximity to such wall.

In Fig. 3 the liquid crystal day/night mirror 1 is shown in field-on operation. Specifically, the switch 17 has been closed so that an electric field is being applied to the liquid crystal material 12, which aligns with respect to the electric field; the liquid crystal structure is considered to assume a generally parallel alignment in such field-on condition. Since the ordinary index of refraction of the liquid crystal 30 in field-on condition is matched to that of the containment medium 32, the liquid crystal material 12 becomes essentially optically transparent and light incident thereon is not refracted at interfaces between liquid crystal and containment medium. During such field-on operation of mirror 1, incident light represented by light ray 40 is transmitted through the partially transmitting reflector 11, electrode 21 (if separate from such reflector 11), and liquid crystal material 12 so as to be incident on the reflector 10. Such incident light ray 40 then is reflected by the reflector 10 as reflected ray 41, which is transmitted back through the liquid crystal material 12, electrode 21 and reflector 11, for example for viewing by an observer.

The amount of light or intensity of light incident on the reflector 10 during such field-on operation of the mirror 1 ordinarily visually discernibly exceeds the amount or intensity of the light reflected by the partial reflector 11. Indeed, preferably the amount of light reflected by the partial reflector 11 during such operation (the incident light 40a and reflected light 40b being shown in phantom in Fig. 3) is so negligible as not to be noticed, or at least not to be substantially noticed, by an observer, as compared to the visual impact of the unattenuated or substantially unattenuated light reflected by the reflector 10. Thus, the image observed by one looking into the mirror will appear to be located at the surface of reflector 10, rather than reflector 11.

Field-off operation of the liquid crystal day/night mirror 1 is depicted in Fig. 4. The switch 17 is open, and, therefore, no electric field is applied to the liquid crystal material. Accordingly, light which is incident on the liquid crystal material 12 is refracted and is scattered; this would include that light initially transmitted through the partial reflector 11 as well as light that is reflected by the reflector 10. Such scattering is effected because the extraordinary index of refraction of the liquid crystal 30 is different from the index of refraction of the containment medium 32. An incident light ray 50, which is transmitted through the partial reflector 11 and is scattered in the liquid crystal material 12 is representatively illustrated in Fig. 4. Such scattered light, which is generally represented at 51, creates a generally uniform background of illumination, as it is viewed through the partial reflector 11 somewhat like the appearance of a relatively dim diffuse light transmitted through translucent diffusing material. The frame 6 may include an optical absorber to absorb light scattered to the side edges of the mirror 1.

Light which is incident on the partial reflector 11 and is reflected thereby during such field-off operation of the mirror 1 will appear significant, discernible and will make an impact when observed by an observer against the diffuse background caused by the aforementioned scattered light.

The image therefore observed in the mirror appears to be located at the surface of reflector 11 as opposed to the surface of reflector 10. An example of such observed light is represented by incident ray 52 and reflected ray 53. Since a portion of the overall light incident on the mirror 1 during such field-off operation is scattered, indeed is scattered in directions not toward the eye of the observer, the mirror 1 effectively provides an attenuated observable reflected light output, i.e., of reduced glare and intensity.

Thus, it will be appreciated that the mirror 1 according to the invention can be operated in field-off condition to reduce the glare of a vehicle approaching from the rear, i.e., following, headlights reflected by a rearview vehicle mirror and shining into the eyes of the vehicle operator. The mirror 1 also may be used for other purposes selectively to reduce intensity of reflected light when operational in scattering mode or condition of the liquid crystal material. On the other hand, when there is no need to attenuate light, e.g., to reduce glare, the mirror 1 may be operated in the non-scattering or field-on mode of the liquid crystal material 12 so that substantially all light incident on the mirror and not reflected by the partial reflector 11 will be transmitted to and reflected by the reflector 10 for viewing by an observer, automated equipment, etc. Additionally, as discussed, due to the surface dimensions of reflector 11 and electrode 21, parallax between reflectors 10 and 11 is minimized.

Referring, now, to Fig. 5, the mirror 1' includes liquid crystal material 12' that has mixed with the liquid crystal 30' pleochroic dye 60 (see Fig. 8). The liquid crystal 30' preferably is operationally nematic and has positive dielectric anisotropy. However, unlike the liquid crystal 30, the liquid crystal 30' has low birefringence characteristics. Moreover, the liquid crystal 30' has an index of refraction that is matched closely, if not identically, to that of the containment medium 32' so that whether in field-on or field-off condition there will be no or only a minimum of light refraction at the interfaces between the liquid crystal 30' and containment medium 32'.

The electrode 21' preferably is optically transparent or substantially so, such as indium oxide, and the electrode 20' and reflector 10' comprise a layer of electrically conductive optically reflective material, such as chrome or silver. Therefore, incident light 61 will be transmitted through the electrode 21' and through the liquid crystal material 12' and will be reflected by the reflector 10' as reflected light back through the liquid crystal material 12' and electrode 21' for viewing by an observer. The pleochroic dye in the liquid crystal 30' will absorb some of the light transmitted therethrough, and the degree of such absorption is a function of whether or not an electric field is applied to the liquid crystal material and of the magnitude of such field. Preferably such absorption in field-on condition of the liquid crystal should be zero or as close to zero as possible to maximize intensity of reflected light in the field-on state.

Specifically, the dye alignment follows the alignment of the liquid crystal 30', as is illustrated schematically in Fig. 8.

Therefore, when the liquid crystal structure is in distorted alignment, the dye will provide a relatively substantial amount of light absorption. However, when the liquid crystal 30' is in parallel alignment, e.g., like that liquid crystal shown in Fig. 7, light absorption by the dye will be minimized. As the magnitude of electric field is increased or decreased, the amount of distortion of the liquid crystal material will vary, and the amount of absorption by the dye also will correspondingly vary.

The circuit 15' includes a battery or other electrical power source 16' and a switch 17' for selective opening and closing to remove or to apply an electric field to the liquid crystal material 12'. In field-on condition of the liquid crystal material 12', the mirror 1' will have maximum reflection characteristics. With the switch 17' open, the liquid crystal material 12' is in distorted alignment, field-off condition and the mirror will be operative in glare reduction, reduced reflection intensity mode. The circuit 15' further may include a variable element 63, such as a variable resistor or potentiometer or a circuit for varying the magnitude of electric field applied by the electrodes 11', 21' to the liquid crystal material 12'. Such variable element 63 may be manually adjusted, say by the vehicle operator, to adjust the intensity of the reflected light, i.e., the proportion of the incident light 61 that is returned for observation as reflected light 62 thus to provide a varying glare reduction/adjustment capability for the mirror 1'.

The circuit 15' may be manually adjustable or part or all of the circuit may be automatically responsive to one or more conditions, such as ambient lighting conditions, intensity of light directed at the mirror 1' from headlights of an approaching vehicle, i.e., from behind the vehicle containing the mirror 1', and so on, generally as was mentioned above the respect to the circuit 15. Like the circuit 15, the circuit 15' would be intended to apply electric field to achieve parallel alignment of the liquid crystal 30' in the presence of daylight, for example, and to reduce or to eliminate the electric field at night. The variable element 63 may be a separate circuit or a variable resistor type device that increases impedance to decrease electric field and to increase attenuation of light reflected by the mirror 1' as ambient light decreases. Similarly, the variable element 63 would decrease in impedance to increase electric field and to reduce attenuation of reflected light from the mirror 1' when ambient light conditions would increase.

For protection or other purpose, a coating, layer, or other material, not shown, may be applied to the face 2 of the mirrors 1, 1'. Also, although the mirrors are shown with the liquid crystal material and reflectors on the light incident side of the support 22, such support may be located on the light incident side of one or more of the reflectors, liquid crystal material and/or electrode(s); in such latter case the support would be optically transparent.

In view of the foregoing, it will be appreciated that the present invention provides for adjustment of the amount of or proportion of incident light directed to a mirror device that is reflected by such device for observation by an observer, such as the operator or driver of a vehicle.

**Claims**

1. A mirror comprising a support (22), and reflector means (10, 11, 10') to reflect light incident thereon, characterised by liquid crystal means selectively operable primarily to transmit or primarily to scatter light, arranged to determine the amount of light reflected by said reflector means (10, 11; 10').

2. A mirror as claimed in Claim 1, characterised in that said reflector means (10, 11) comprises two reflectors (10, 11), one (11) being partially reflective and partially transmissive, said liquid crystal means (12) being positioned between said reflectors (10, 11).

3. A mirror as claimed in Claim 1 or Claim 2, characterised in that said liquid crystal means (12, 12') comprises operationally nematic liquid crystal having positive dielectric anisotropy and a containment medium means for containing plural volumes of said liquid crystal.

4. A mirror as claimed in Claim 3, characterised in that said containment medium means comprises surface means for distorting the natural structure of said liquid crystal absent a prescribed input.

5. A mirror as claimed in Claim 4, characterised in that said liquid crystal is birefringement and has an ordinary index of refraction in the presence of said prescribed input that is substantially matched to the index of refraction of said containment medium means to minimize refraction and scattering of light and an extraordinary index of refraction in the absence of said prescribed input that is different from the index of refraction of said containment medium means to cause refraction and scattering of light.

6. A mirror as claimed in Claim 4 or Claim 5, characterised by input means for applying said prescribed input to said liquid crystal means, said input means comprising electrode means (20, 21; 20′, 21′) at opposite surfaces of said liquid crystal means (12, 12′) for applying an electric field across said liquid crystal means (12, 12′).

7. A mirror as claimed in Claim 6, characterised by circuit means for providing electric energy to said electrode means (20, 21; 20′, 21′) to effect application of said electric field to said liquid crystal means (12, 12′), said circuit means including automatic means responsive to a further input for controlling application of such electric energy to said electrode means (20, 21; 20′ 21′).

8. A mirror as claimed in Claim 6 or Claim 7, characterised in that at least one of said reflectors (10, 11) is electrically conductive and comprises at least one of said electrode means (20, 21).

9. A mirror as claimed in any preceding claim, characterised by pleochroic dye in said liquid crystal (12, 12′), the structure of said pleochroic dye conforming to the structure of said liquid crystal (12, 12′) and said dye being operative to absorb light when said liquid crystal structure is in distorted alignment.

0236112

FIG. — 1

FIG. — 2

FIG. — 3

FIG. — 4

FIG. — 5

0236112

FIG.-6

FIG.-7

FIG.-8